# EUROPEAN PATENT SPECIFICATION

(11) **EP 4 261 001 B1**
(45) Date of publication and mention of the grant of the patent: **21.08.2024**
(21) Application number: 23167097.7
(22) Date of filing: 06.04.2023
(51) Int. Cl.: B29C 43/46, B29C 43/48, B29D 99/00, B68G 7/04, D04H 1/54, D04H 1/70, B29K 105/08, B29K 105/26, B29L 31/58, D04H 1/46, D04H 1/593

(54) **MACHINE FOR FORMING MATTRESSES OR PANELS FROM A NON-SOLID MATERIAL**
MASCHINE ZUR HERSTELLUNG VON MATRATZEN ODER PLATTEN AUS EINEM NICHTFESTEN MATERIAL
MACHINE POUR FORMER DES MATELAS OU DES PANNEAUX À PARTIR D'UN MATÉRIAU NON SOLIDE

(30) Priority: 15.04.2022 IT 202200007649
(43) Date of publication of application: 18.10.2023
(73) Proprietor: Technoplants S.R.L., 59100 Prato (IT)
(72) Inventor: GUALTIERI, Marco, Prato (IT)
(74) Representative: Firmati, Leonardo

(56) References cited:
- WO-A1-2020/250139
- US-A- 5 051 122
- US-A- 6 062 010
- US-A1- 2020 149 199

## Description

The invention relates to a machine for forming mattresses or panels from non-solid material.

The term "mattress" or "panel" is used to mean a solid product having variable density and consisting of a majority of material which is non-solid in the fibrous or flock state and a minimum part of adhesive material designed to make the fibrous or flock material cohesive and solid.

The quantity of adhesive may vary until being reduced to zero as a function of the fact that the non-solid material is or is not processed by mechanical devices such as to interlace and cross the fibres together (for example, by needle punching).

Currently, there are machines for forming mattresses or panels comprising a first station for loading the material to be compacted in the form of a mattress, a second processing station, for example comprising cylinders and lastly a pressing station, for example for performing a pressing operation for imparting a preset density and a predetermined final thickness to the mattress at the outlet.

The processing station of the prior art machines generally comprises a main cylinder, the so-called "drum", rotating in a single direction of rotation and designed, as well as to carry out the processing, also to transfer the fibres of non-solid material from the loading station to the unloading station.

During the movement of the fibres on the drum, they are processed thanks to the mechanical action of the drum with at least one further processing cylinder positioned in contact with it.

The transfer of the fibres of processed non-solid material towards the unloading station is accomplished thanks to the kinetic energy of the drum or with the aid of a jet of air emitted in such a way that it touches an outer portion of the processing cylinder (drum).

The jet, whilst on the one hand it helps the detachment of the fibres from the drum, on the other hand it does not allow an optimum directing of the fibres inside the various zones of the volume of the unloading station. This limitation often causes undesired build-ups of non-solid material in zones of the unloading station which, then, result in defects in the mattress or panel produced.

Whilst the prior art machines allow mattresses to be made from non-solid materials they cannot be modulated in the various processing operations which can be obtained and they do not allow an optimum flow and directing of the non-solid material processed towards the unloading station.

A prior art machine is described in patent document US6062010A.

The aim of the invention is to provide a machine for forming mattresses or panels from non-solid material which optimises the distribution of the non-solid material downstream of the processing station, for example in the various zones of the volume of the unloading station.

In particular, the aim of the invention is to provide a machine for forming mattresses or panels from non-solid material which allows the direction of the flow of fibres at the outlet from the processing station to be controlled in such a way as to fill in an optimum manner the subsequent unloading operating station, for example a pressing station.

The aim of the invention is also to provide a machine for forming mattresses or panels from non-solid material which allows the production of mattresses or panels free of defects due to the poor positioning and accumulation of the fibres of non-solid material.

The above-mentioned aims are achieved by a machine for forming mattresses or panels from non-solid material which comprises the technical features described in one or more of the appended claims.

Further features and advantages of this invention are more apparent in the description below, with reference to preferred, non-limiting embodiments of a machine for forming mattresses or panels from non-solid material, as illustrated in the accompanying drawings, in which:

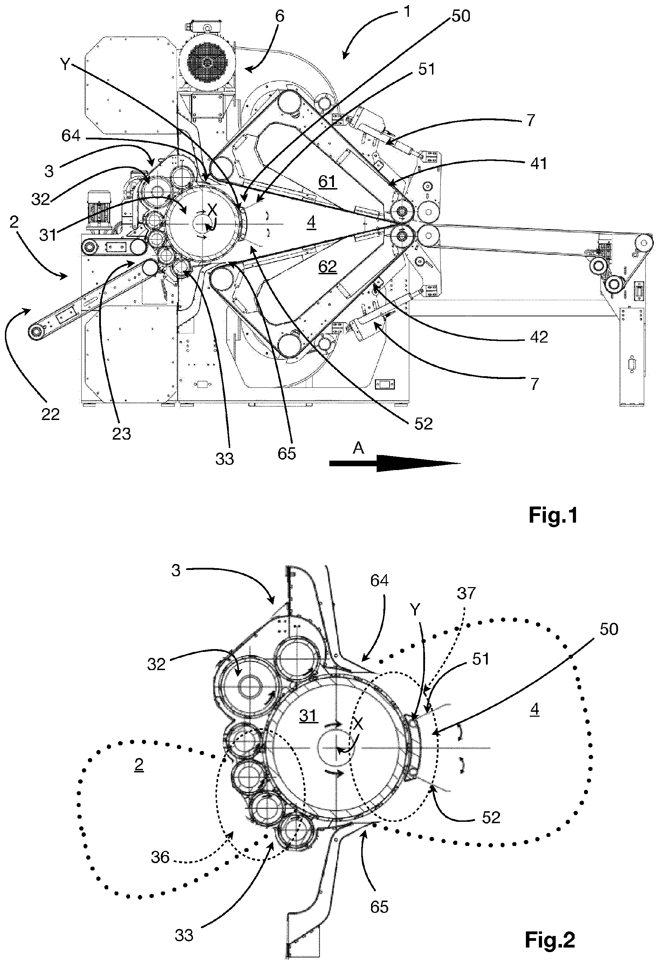

- Figure 1 is a cross section of a machine for forming mattresses or panels from non-solid material according to the invention in a first operating configuration,
- Figure 2 shows a detail of the processing and transferring station of a machine according to the invention and

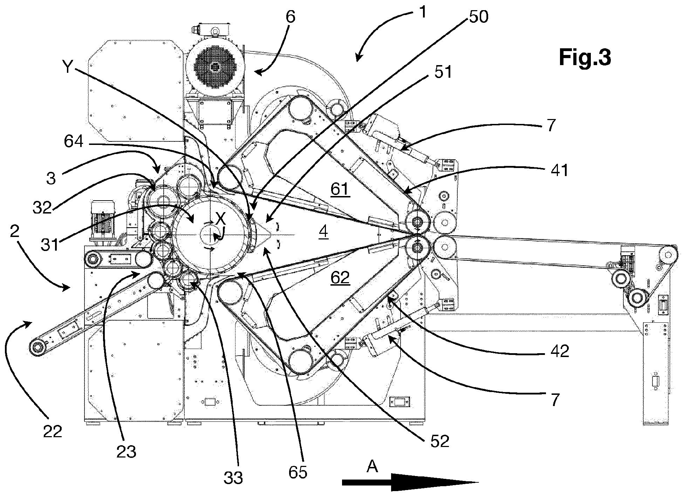

- Figure 3 is a cross section of a machine for forming mattresses or panels from non-solid material in a second operating configuration.

A machine is described below with reference to the accompanying drawings for forming mattresses or panels from non-solid material according to the invention.

The numeral 1 denotes in its entirety a machine for forming mattresses or panels from non-solid material, hereafter also referred to as the machine 1.

In order to obtain a large mattress or panel it is necessary that a predetermined percentage of additive materials be added to the plurality of non-solid materials which perform the function of tacking together the non-solid materials and connecting them to each other.

It is also possible to make the non-solid materials solid by providing a mechanical processing such as, for example, needle punching.

The additive materials may be, for example, two-part components, powders or liquids which can be activated at ambient temperature or at higher temperatures.

In this regard, advantageously, a machine 1 for forming mattresses or panels from non-solid material comprises, in addition to the various stations described below, also a station for heating the mattress or panel being formed.

Merely by way of an example, the heating station is of the type using hot air, steam and/or comprising electrical resistors or fuel burners.

It is understood that the heating station may be positioned either upstream or downstream of the machine 1 according to the invention.

The machine 1 for forming mattresses or panels according to the invention comprises a loading station 2 having an inlet 22 and an outlet 23 for a non-solid material.

The term "non-solid material" means, for example, fibres derived from the recycling of fabrics, non-woven fabrics, paper, plastic or in any case fibres or waste of any material which can, by means of a shredding step, be reduced to fibres or pieces with dimensions of from 1 mm to 100 mm.

Advantageously, the loading station 2 extends longitudinally between the inlet portion 22 and the outlet portion 23 inclined at a positive angle (the material passes through the station along an upwards direction) of between 25° and 75° relative to the advancement and forming direction (A). Advantageously, the angle of inclination is between 45 and 60 degrees upwards with respect to the horizontal, as shown in the drawings.

The machine 1 also comprises a processing and transferring station 3 comprising an inlet portion 36 for the non-solid material connected to the loading station 2, and an outlet portion 37 towards which said processed non-solid material is directed.

The inlet portion 36 is located at the outlet 23 of the loading station 2.

According to the embodiment illustrated in the drawings, the processing and transferring station 3 also comprises an element 31 for processing and transferring the non-solid material.

Advantageously, the element 31 comprises a first processing cylinder 31 (called "drum") and at least a second processing cylinder 32.

The first cylinder 31 and the at least the second processing cylinder 32 act in conjunction with each other to perform the mechanical processing on the non-solid material.

Depending on the type of non-solid material being processed, the second processing cylinder 32 may comprise a pair or a plurality of cylinders and/or rotating counter-rotating rollers configured to transport in an optimised fashion the material arriving from the outlet portion 23 to the first processing cylinder 31.

The first processing cylinder 31, that is to say, the cylinder which performs the main processing function determined as a function of the material being processed, advantageously comprises a cylinder fitted with rigid seals, slats with cylindrical tips or with segments. The second processing cylinder(s) 32 also advantageously comprise a cylinder fitted with rigid seals, with slats with cylindrical tips or with segments.

It is understood that the processing and transferring station 3, according to further embodiments, comprises different types of element 31, for example a rotary element with a non-circular cross section.

The function of the processing and transferring station 3 is to mix and intertwine in an adequate manner the fibres of the non-solid material which will form the mattress or panel.

A further function of the station 3 is to transfer the non-solid material from the loading station 2 to the subsequent stations, giving the material an adequate kinetic energy.

The machine 1 according to the invention also comprises an unloading station 4 positioned downstream of the processing station 3 and facing the outlet portion 37. According to the embodiment shown in the drawings, the unloading station 4 comprises a pressing station 4.

The pressing station 4 comprises two first conveyor belts 41 and 42, one upper 41 and one lower 42, counter-rotating relative to each other in such a way that the relative movement corresponds to the advancement direction (A).

The two conveyor belts 41, 42 are movable towards each other for pressing the mattress or panel being formed. As shown in the drawings, the two first belts 41, 42 may be positioned relative to each other in such a way as to form between them an intermediate zone with a cone cross section having the tip downstream relative to the processing station 3 along the advancement direction (A) .

In this way it is possible to obtain an increasing pressing in a uniform manner on the mattress or panel being formed.

According to the embodiment illustrated in the accompanying drawings both the belts 41, 42 are movable towards and away from each other.

Advantageously, the conveyor belts 41, 42 are perforated and permeable to air.

The machine 1 according to the invention also comprises a drive device 50, positioned close to the outlet portion 37 of the processing and transferring station 3.

The drive device 50 is configured for directing the non-solid material processed and moved from the processing and transferring station 3 towards predetermined zones of the unloading station 4.

With reference to the embodiment shown in the drawings, the drive device 50 is positioned close to the periphery of the first processing cylinder 31 and interposed between the two conveyor belts 41, 42 of the pressing station 4.

Advantageously, the drive device 50 comprises a deflector 51, 52 which is movable so as to oscillate about a respective axis of oscillation (Y), which is positioned parallel to the central axis (X) of the first cylinder 31.

The deflector 51, 52 is made in the form of a band, advantageously made of a rigid material, for example metal or plastic.

Advantageously, the drive device 50 also comprises motor means and a respective control unit configured to regulate the frequency and the oscillation amplitude of the deflector 51, 52.

Advantageously, the drive device 50 comprises two deflectors 51, 52, each of which, according to the embodiment, operate selectively with a respective direction of rotation (clockwise or anti-clockwise) of the first cylinder 31.

Advantageously, there are two deflectors 51, 52 and they are movable synchronously or independently of each other.

Advantageously, the first processing cylinder 31 is motor-driven and designed to rotate with respect to a relative central axis X, as shown in the drawings, in both directions of rotation (clockwise and anticlockwise).

The first cylinder 31 and a predetermined second cylinder 32 act in conjunction only when the first cylinder 31 rotates in a direction of rotation (clockwise or anticlockwise).

In effect, with reference to the drawings, if the first processing cylinder 31 rotates clockwise, the processing will be performed by the contact and cooperation with the second processing cylinder 32, otherwise, in the case of rotation of the first cylinder 31 in an anti-clockwise direction, the non-solid material is not passed through the second cylinder 32 but, rather, through the lower portion of the first cylinder 31 in order to perform a second different type of processing or a simple by-pass without any processing but only a transfer of the non-solid material.

In this regard, advantageously, in the machine 1 according to the invention the outlet 23 of the loading station 2 faces the first processing cylinder 31 and comprises a third processing cylinder 33.

The third processing cylinder 33 is, for example, different in terms of shape and type, in such a way that acting in conjunction with the first cylinder 31 (when this rotates in an anticlockwise direction) it performs a processing different from that performed by the second cylinder 32.

More in detail, as shown in the drawings, the second 32 and third 33 processing cylinder face the periphery of the first processing cylinder 31 on opposite sides of the loading station 2.

In particular, therefore, in the configuration shown in the drawings, if the first cylinder 31 rotates in a clockwise direction on the relative axis X the non-solid material is processed by the first 31 and second 32 cylinder pair (and the third cylinder 33 is irrelevant) whilst if the first cylinder 31 rotates in an anticlockwise direction with respect to the relative axis X the non-solid material is processed by the first 31 and third 33 cylinder pair (and the second cylinder 32 is irrelevant).

It is understood that in the configuration in which the third processing cylinder 33 is not present (or is moved away from the contact with the first cylinder 31) the second trajectory of the material followed when the first cylinder rotates anticlockwise does not perform any processing, acting as a by-pass.

Again with reference to the embodiment shown in the accompanying drawings, advantageously the machine 1 according to the invention also comprises a suction station 6 having at least one suction portion 61, 62 positioned at least at one of the conveyor belts 41, 42 and at least one emission portion 64, 65 of at least one jet of air located at said first processing cylinder 31. Advantageously, moreover, the suction station 6 comprises two suction portions 61, 62 positioned facing each another.

The opposite suction allows the fibres to be oriented in a predetermined manner, that is to say, substantially perpendicular to the advancement direction (A) such that a volumizing is obtained or a greater order in the arrangement of the fibres and, therefore, a greater density is obtained.

The jet of air is directed towards the unloading station 4 along the advancement direction (A) in a zone interposed between the conveyor belts 41, 42.

The jet of air generated by the emission portions 64, 65 facilitates the detachment of the fibres of non-solid material from the first cylinder 31 directing them towards the unloading station 4 with the aid of the drive device 50.

In effect, the air jets are directed on respective deflectors 51, 52 (the jet emitted by the portion 64 on the deflector 51 and vice versa the jet of air emitted by the portion 65 on the deflector 52) in such a way as to direct the fibres to predetermined zones of the unloading station 4.

For example, if the deflectors 51, 52 are actuated to move with a constant oscillating direction (relative to the axis (Y)) a "concertina" and uniform distribution of the non-solid material inside the entire unloading station 4 will be obtained.

Advantageously, moreover, the suction station 6 is configured for working substantially in a closed loop; in effect, the air sucked for example by a suction device is drawn from the first pressing station 4 by the portions 61 and 62 and the air is blown by the emission portions 64, 65 into the intermediate portion of the two conveyor belts 41, 42.

In this way the air consumption is reduced to a minimum, if not completely set to zero.

Advantageously, moreover, according to the embodiment shown in the drawings, the machine 1 according to the invention comprises a movement device 7 designed to move towards each other the conveyor belts 41, 42 of the pressing station 4 and therefore perform a vertical pressing operation, that is to say, substantially perpendicular to the advancement direction (A). Advantageously, the movement device 7 comprises electro-actuated means, for example a pneumatic or hydraulic actuator which is actuated under command by, for example, a respective electric motor.

Advantageously, moreover, the movement device 7 is configured for moving at least the upper belt 41 of the pressing station 4 in such a way that it does not maintain a position parallel to the lower belt 42, that is to say, forming an intermediate portion for passage of the mattress or panel being formed in the form of a cone, with the tip of the cone facing towards the outlet of the machine 1.

The invention brings important advantages, overcoming the limitations and drawbacks of the prior art.

A first important advantage consists in the fact that a machine 1 according to the invention directs in a predetermined manner the processed non-solid material in the processing and transferring station 3 inside various zones of the unloading station 4.

This makes it possible to reduce to a minimum the risk of defects in the mattress or panel produced since there is the possibility of guaranteeing an optimum distribution of the processed non-solid material inside the unloading station 4, thus avoiding zones with a lesser or greater quantity of it.

## Claims

1. A forming machine (1) to form mattresses or panels from a non-solid material comprising:
- a station (2) for loading said non-solid material,
- a processing and transferring station (3) comprising an inlet portion (36) of said non-solid material connected to said loading station (2), a processing and transferring element (31) of said non-solid material, an outlet portion (37) to which said processed non-solid material is directed,
- an unloading station (4) positioned downstream of said processing and transferring station (3) and facing said outlet portion (37),
- a drive device (50), positioned close to said outlet portion (37) of said processing and transferring station (3), said drive device (50) being configured for directing said non-solid material processed and moved by said processing and transferring station (3) towards predetermined zones of said unloading station (4), said machine (1) being **characterised in that** said drive device (50) comprises two deflectors (51, 52), wherein said two deflectors (51, 52) are movable synchronously with each other or independently of each other.

2. The machine (1) according to claim 1, wherein said drive device (50) comprises a deflector (51, 52) movable to oscillate about a respective axis of oscillation (Y).

3. The machine (1) according to any one of the preceding claims, wherein said drive device (50) comprises motor means and a respective control unit configured to regulate the frequency and amplitude of oscillation of said deflector (51, 52).

4. The machine (1) according to any one of the preceding claims, further comprising, at least one emission portion (64, 65) of at least one jet of air positioned at said outlet portion (37) of said processing and transferring station (3).

5. The machine (1) according to any one of the preceding claims, wherein said processing and transferring station (3) comprises a first processing cylinder (31) and a second processing cylinder (32), said first processing cylinder (31) acting in conjunction with said second processing cylinder (32).

6. The machine (1) according to the preceding claim, wherein said first cylinder (31) is motorised and designed to rotate with respect to its own central axis (X) in both directions of rotation, said cylinders (31, 32) acting in conjunction in only one of said directions of rotation.

7. The machine (1) according to any one of the preceding claims 5 or 6, further comprising a third processing cylinder (33), said second (32) and third (33) processing cylinders facing the periphery of said first processing cylinder (31) from opposite portions of said loading station (2).

8. The machine (1) according to any one of claims 5 to 7 when dependent on claim 4, wherein each of said two deflectors (51, 52), operate selectively with a respective direction of rotation of said first cylinder (31) .

## Patentansprüche

1. Formmaschine (1) zum Formen von Matratzen oder Platten aus einem nichtfesten Material, umfassend:
- eine Station (2) zum Laden des nichtfesten Materials,
- eine Verarbeitungs- und Übergabestation (3), umfassend einen Einlassabschnitt (36) des nichtfesten Materials, der mit der Ladestation (2) verbunden ist, ein Verarbeitungs- und Übergabeelement (31) des nichtfesten Materials, einen Auslassabschnitt (37), zu dem das verarbeitete, nichtfeste Material weitergeleitet wird,
- eine Entladestation (4), die nachgelagert nach der Verarbeitungs- und Übergabestation (3) positioniert und dem Auslassabschnitt (37) zugewandt ist,
- eine Antriebsvorrichtung (50), die in der Nähe des Auslassabschnitts (37) der Verarbeitungs- und Übergabestation (3) positioniert ist, wobei die Antriebsvorrichtung (50) ausgelegt ist, um das nichtfeste Material, das von der Verarbeitungs- und Übergabestation (3) verarbeitet und in Richtung vorbestimmter Zonen der Entladestation (4) bewegt wird, weiterzuleiten, wobei die Maschine (1) **dadurch gekennzeichnet ist, dass** die Antriebsvorrichtung (50) zwei Deflektoren (51, 52) umfasst, wobei die zwei Deflektoren (51, 52) zueinander synchron oder unabhängig voneinander bewegbar sind.

2. Maschine (1) nach Anspruch 1, wobei die Antriebsvorrichtung (50) einen Deflektor (51, 52) umfasst, der bewegbar ist, um um eine entsprechende Schwingungsachse (Y) zu schwingen.

3. Maschine (1) nach einem der vorhergehenden Ansprüche, wobei die Antriebsvorrichtung (50) Motormittel und eine jeweilige Steuereinheit umfasst, die ausgelegt ist, um die Frequenz und die Schwingungsamplitude des Deflektors (51, 52) zu regeln.

4. Maschine (1) nach einem der vorhergehenden Ansprüche, ferner umfassend mindestens einen Emissionsabschnitt (64, 65) mindestens eines Luftstrahls, der am Auslassabschnitt (37) der Verarbeitungs- und Übergabestation (3) positioniert ist.

5. Maschine (1) nach einem der vorhergehenden Ansprüche, wobei die Verarbeitungs- und Übergabestation (3) einen ersten Verarbeitungszylinder (31) und einen zweiten Verarbeitungszylinder (32) umfasst, wobei der erste Verarbeitungszylinder (31) mit dem zweiten Verarbeitungszylinder (32) zusammenwirkt.

6. Maschine (1) nach dem vorhergehenden Anspruch, wobei der erste Zylinder (31) motorisiert und ausgestaltet ist, um sich in beiden Drehrichtungen in Bezug auf seine eigene Mittelachse (X) zu drehen, wobei die Zylinder (31, 32) in nur einer der Drehrichtungen zusammenwirken.

7. Maschine (1) nach einem der vorhergehenden Ansprüche 5 oder 6, weiterhin umfassend einen dritten Verarbeitungszylinder (33), wobei der zweite (32) und der dritte (33) Verarbeitungszylinder dem Umfang des ersten Verarbeitungszylinders (31) von gegenüberliegenden Abschnitten der Ladestation (2) zugewandt sind.

8. Maschine (1) nach einem der Ansprüche 5 bis 7, wenn abhängig von Anspruch 4, wobei ein jeder der zwei Deflektoren (51, 52) selektiv mit einer jeweiligen Drehrichtung des ersten Zylinders (31) funktioniert.

## Revendications

1. Machine de formage (1) pour former des matelas ou des panneaux à partir d'un matériau non solide, comprenant :
- un poste (2) pour charger ledit matériau non solide,
- une station de traitement et de transfert (3), comprenant une portion d'entrée (36) dudit matériau non solide reliée à ladite station de chargement (2), un élément de traitement et de transfert (31) dudit matériau non solide, une portion de sortie (37) vers laquelle ledit matériau non solide traité est dirigé,
- un poste de déchargement (4) positionné en aval dudit poste de traitement et de transfert (3) et faisant face à ladite portion de sortie (37),
- un dispositif d'entraînement (50), positionné à proximité de ladite portion de sortie (37) dudit poste de traitement et de transfert (3), ledit dispositif d'entraînement (50) étant configuré pour diriger ledit matériau non solide traité et déplacé par ledit poste de traitement et de transfert (3) vers des zones prédéterminées dudit poste de déchargement (4), ladite machine (1) étant **caractérisée en ce que** ledit dispositif d'entraînement (50) comprend deux déflecteurs (51, 52), dans lequel lesdits deux déflecteurs (51, 52) sont mobiles de manière synchrone l'un avec l'autre ou indépendamment l'un de l'autre.

2. Machine (1) selon la revendication 1, dans laquelle ledit dispositif d'entraînement (50) comprend un déflecteur (51, 52) mobile pour osciller autour d'un axe d'oscillation respectif (Y).

3. Machine (1) selon l'une quelconque des revendications précédentes, dans laquelle ledit dispositif d'entraînement (50) comprend des moyens moteurs et une unité de commande respective configurée pour réguler la fréquence et l'amplitude d'oscillation dudit déflecteur (51, 52).

4. Machine (1) selon l'une quelconque des revendications précédentes, comprenant en outre au moins une portion d'émission (64, 65) d'au moins un jet d'air positionné au niveau de ladite portion de sortie (37) dudit poste de traitement et de transfert (3).

5. Machine (1) selon l'une quelconque des revendications précédentes, dans laquelle ladite station de traitement et de transfert (3) comprend un premier cylindre de traitement (31) et un second cylindre de traitement (32), ledit premier cylindre de traitement (31) agissant conjointement avec ledit second cylindre de traitement (32).

6. Machine (1) selon la revendication précédente, dans laquelle ledit premier cylindre (31) est motorisé et conçu pour tourner par rapport à son propre axe central (X) dans les deux sens de rotation, lesdits cylindres (31, 32) agissant conjointement dans un seul desdits sens de rotation.

7. Machine (1) selon l'une quelconque des revendications précédentes 5 ou 6, comprenant en outre un troisième cylindre de traitement (33), lesdits deuxième (32) et troisième (33) cylindres de traitement faisant face à la périphérie dudit premier cylindre de traitement (31) depuis des portions opposées dudit poste de chargement (2).

8. Machine (1) selon l'une quelconque des revendications 5 à 7, lorsqu'elles dépendent de la revendication 4, dans laquelle chacun desdits deux déflecteurs (51, 52) fonctionne sélectivement avec un sens de rotation respectif dudit premier cylindre (31) .
